# DEMANDE DE BREVET EUROPEEN

(11) **EP 2 730 985 A1**
(43) Date de publication de la demande: **14.05.2014**
(21) Numéro de dépôt: 13190493.0
(22) Date de dépôt: 28.10.2013
(51) Int. Cl.: G05B 19/401

(54) **Système et procédé de contrôle automatique de la conformité de réalisation d'éléments dans une structure d'aéronef**

(30) Priorité: 13.11.2012 FR 1203037
(71) Demandeur: Dassault Aviation, 75008 Paris (FR)
(72) Inventeur: Ballot, Philippe, 75015 Paris (FR); Cahuziere, Yann, 92600 Asnieres sur Seine (FR)
(74) Mandataire: Blot, Philippe Robert Emile

(57) **Abrégé**

Ce système de contrôle de la conformité de réalisation d'éléments (4) comporte :
- un module d'acquisition (6), comprenant :
■ des moyens (14, 18) d'acquisition d'une image desdits éléments (4), et
■ des moyens (16, 24, 26) de déplacement relatif desdits moyens (14, 18) d'acquisition par rapport à ladite structure (3), pour positionner lesdits moyens (14, 18) d'acquisition dans une position d'acquisition d'une image de chaque élément (4),

- un module de commande (8), pour générer une acquisition, pour chacun desdits éléments (4), d'au moins une image dudit élément (4), et
- un module de vérification (10) configuré pour déterminer, à partir d'images d'éléments (4) acquises par lesdits moyens (14, 18) d'acquisition, un indice de conformité représentatif d'une conformité de réalisation de chaque élément (4) par rapport à un modèle numérique.

## Description

La présente invention concerne un système de contrôle automatique de la conformité de réalisation d'éléments dans une structure d'aéronef.

Elle s'applique en particulier au contrôle de la conformité d'éléments assemblés dans une structure d'aéronef, cette structure étant constituée de pièces assemblées au moyen d'organes de fixation, par exemple des rivets ou d'autres types d'organes de fixation.

Les opérations de contrôle de la conformité de réalisation d'éléments sont généralement réalisées de façon manuelle, par un opérateur qui vérifie visuellement et à l'aide de moyens de mesure chaque élément de la structure (pièce ou organe de fixation) l'un après l'autre. L'opérateur vérifie notamment que cet élément est effectivement présent et évalue la qualité de montage de cet élément. Dans le cas d'un rivet par exemple, l'opérateur vérifie qu'il est conforme à la nomenclature, qu'il est correctement positionné, qu'il est serti selon les règles de l'art.

De telles opérations de contrôle ne donnent pas entièrement satisfaction.

Notamment, ce contrôle manuel est une opération longue et qui n'est pas entièrement fiable. En effet, il peut arriver que l'opérateur oublie de vérifier un élément, ou qu'un défaut de montage ne soit pas détecté lors du contrôle visuel.

En outre, il n'existe pas de garantie que ces opérations de contrôle soient réalisées en regard de la dernière version du modèle numérique de la structure. Or, si l'opérateur s'appuie lors des opérations de contrôle sur une version ancienne du modèle numérique de la structure, il existe des risques que malgré un contrôle soigné de l'opérateur, la réalisation ne soit pas conforme au modèle numérique de référence.

Ainsi, les opérations manuelles de contrôle ne permettent pas de garantir entièrement la conformité de la réalisation.

Le but de l'invention est donc de proposer un système et un procédé de contrôle de la conformité de la réalisation d'éléments qui ne présente pas ces inconvénients, et qui permette un contrôle rapide et sûr de la conformité de réalisation de ces éléments.

A cette fin, l'invention a pour objet un système du type précité, **caractérisé en ce qu'il** comporte :
- un module d'acquisition, comprenant :
   ■ des moyens d'acquisition d'une image desdits éléments, et
   ■ des moyens de déplacement relatif desdits moyens d'acquisition par rapport à ladite structure, configurés pour positionner lesdits moyens d'acquisition dans une position d'acquisition d'une image de chacun desdits éléments,
- un module de commande dudit module d'acquisition, configuré pour générer une acquisition par lesdits moyens d'acquisition, pour chacun desdits éléments, d'au moins une image dudit élément, et
- un module de vérification de la conformité de réalisation de chaque élément, configuré pour analyser des images d'éléments acquises par lesdits moyens d'acquisition et pour déterminer, à partir desdites images, au moins un indice de conformité représentatif d'une conformité de réalisation de chaque élément par rapport à un modèle numérique prédéfini dudit élément.

Selon d'autres aspects de l'invention, le système comprend l'une ou plusieurs des caractéristiques suivantes :
- ledit module de commande est configuré pour commander un déplacement, par lesdits moyens de déplacement, desdits moyens d'acquisition successivement dans chaque position d'acquisition d'une image d'un élément, selon une trajectoire prédéfinie ;
- ledit module de commande comprend des moyens de localisation, configurés pour déterminer, à partir des images acquises et d'un modèle numérique de ladite structure, une localisation de chacun desdits éléments sur ladite structure et ledit module de commande comprend des moyens de détermination de ladite trajectoire prédéfinie, à partir de la localisation de chacun desdits éléments sur ladite structure ;
- lesdits moyens de déplacement comprennent un bras robotisé sur lequel sont montés lesdits moyens d'acquisition, ledit bras robotisé étant propre à déplacer lesdits moyens d'acquisition par rapport à ladite structure ;
- lesdits moyens de déplacement comprennent un bâti de support de ladite structure, ledit bâti de support étant configuré pour déplacer ladite structure ;
- ledit module de commande est configuré pour sélectionner les positions du bâti dans lesquelles une acquisition d'images doit être générée et pour commander pour chaque position du bâti sélectionnée un déplacement desdits moyens d'acquisition successivement dans chaque position d'acquisition d'une image d'un élément, selon une trajectoire prédéfinie ;
- ledit module de commande est configuré pour commander un déplacement du bras robotisé pour placer ledit bâti dans chaque position sélectionnée ;
- le module de vérification comprend des moyens de comparaison de chaque image d'un élément avec une image théorique analogue de cet élément déterminée à partir d'un modèle numérique de ladite structure ;
- lesdits moyens d'acquisition sont propres à acquérir une image permettant une représentation tridimensionnelle de chaque élément ;
- lesdits éléments sont des éléments d'un ensemble prédéterminé d'éléments de la structure, notamment des pièces de la structure, des organes de fixation de ces pièces, des ensembles de pièces et d'organes de fixation, ou des constituants de pièces ou d'organes de fixation ;
- ledit modèle numérique prédéfini est préalablement généré à partir d'un programme de CAO.

L'invention a également pour objet un procédé de contrôle automatique de la conformité de réalisation d'éléments dans une structure d'aéronef, **caractérisé en ce qu'il** comprend :
- une phase de fourniture d'un système selon l'invention,
- une phase d'acquisition d'images, comprenant une commande par ledit module de commande dudit module d'acquisition pour l'acquisition par ledit module d'acquisition d'images desdits éléments,
- une phase de vérification de la conformité de réalisation de chaque élément, comprenant une analyse des images d'éléments pour déterminer, à partir desdites images, un indice de conformité représentatif d'une conformité de réalisation de chaque élément par rapport à un modèle numérique prédéfini dudit élément.

Selon d'autres aspects de l'invention, le procédé comprend l'une ou plusieurs des caractéristiques suivantes :
- la phase d'acquisition comporte un déplacement par lesdits moyens de déplacement desdits moyens d'acquisition successivement dans chaque position d'acquisition d'une image d'un élément, selon une trajectoire prédéfinie ;
- le procédé comprend en outre une phase de préparation du contrôle, comprenant une étape de génération d'un programme de contrôle dudit module d'acquisition pour l'acquisition par ledit module d'acquisition des images desdits éléments ;
- ladite phase de préparation comprend en outre :
   - une étape de détermination, à partir d'un modèle numérique de ladite structure, d'une localisation de chacun desdits éléments sur ladite structure,
   - une étape de détermination de ladite trajectoire prédéfinie, à partir de la localisation de chacun desdits éléments sur ladite structure ;
- la phase de vérification comprend une étape de comparaison de chaque image d'un élément avec une image théorique analogue de cet élément déterminée à partir d'un modèle numérique de ladite structure ;
- le procédé comporte en outre une phase d'affichage, à destination d'un utilisateur, d'au moins une partie des indices de qualité déterminés pour lesdits éléments.

L'invention sera mieux comprise à la lecture de la description qui va suivre, donnée uniquement à titre d'exemple, et faite en se référant aux dessins annexés, sur lesquels :
- la Figure 1 est un schéma d'un système de contrôle selon un mode de réalisation de l'invention ;
- la Figure 2 est un schéma synoptique d'un procédé de contrôle selon un mode de réalisation de l'invention.

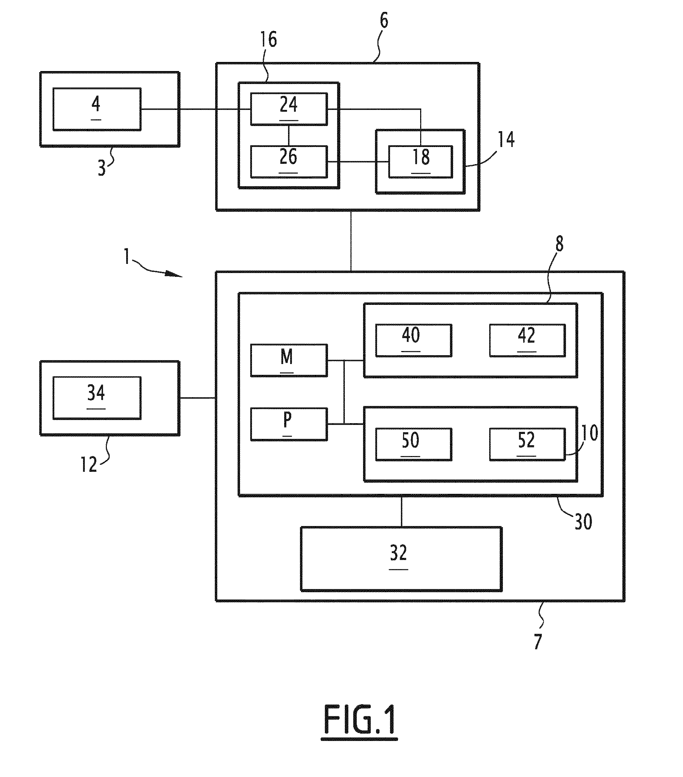

On a représenté sur la Figure 1, de manière schématique, un système 1 selon un mode de réalisation de l'invention, pour le contrôle automatique de la conformité de réalisation d'éléments dans une structure 3 d'aéronef.

La structure 3 est par exemple un châssis d'aéronef, une soute ou tout autre tronçon de l'aéronef, ou encore un assemblage de panneaux de revêtement.

Le système 1 est adapté pour contrôler de manière automatique, c'est-à-dire sans qu'une intervention humaine ne soit nécessaire, la conformité de la réalisation d'un ensemble prédéterminé d'éléments 4 de cette structure 3. Ces éléments peuvent être des pièces de la structure 3, des organes de fixation de ces pièces, des ensembles de pièces et d'organes de fixation, ou des constituants de pièces ou d'organes de fixation.

En particulier, le système 1 est adapté pour élaborer, à partir d'un modèle numérique M de cette structure, un plan de contrôle de la structure 3, et pour mettre en oeuvre ce plan de contrôle.

A cette fin, le système 1 comporte un module 6 d'acquisition d'images de la structure, et une unité centrale 7 de commande.

L'unité centrale 7 de commande comprend un module 8 de commande du module 6 d'acquisition et un module 10 de vérification, à partir d'images issues du module 6 d'acquisition, de la conformité de la réalisation de chaque élément à contrôler 4.

Le module 6 d'acquisition est propre à être commandé par le module 8 de commande pour capturer des images des éléments à contrôler 4, et à transmettre ces images au module 10 de vérification.

Le module 6 d'acquisition est mobile relativement à la structure 3. Le module 6 d'acquisition comprend ainsi des moyens 14 d'acquisition d'images et des moyens 16 de déplacement relatif de ces moyens 14 d'acquisition par rapport à la structure 3.

Les moyens 14 d'acquisition d'images comprennent avantageusement un numériseur tridimensionnel 18 de type scanner 3D, propre à acquérir des images aptes à permettre de reconstruire une représentation tridimensionnelle de la structure 3.

Le numériseur 18 comprend par exemple au moins un capteur optique couplé à une source de rayonnement telle qu'un projecteur optique.

L'acquisition de chaque image d'un élément à contrôler 4 nécessite que le numériseur 18 soit placé dans une position adaptée à l'acquisition de cette image. A chaque élément à contrôler 4 est donc associée au moins une position du numériseur 18, appelée par la suite position d'acquisition d'une image de cet élément 4.

Les moyens 16 de déplacement sont ainsi configurés pour déplacer le numériseur 18 par rapport à la structure 3, en réponse à un ordre de commande de l'unité centrale 7, de manière à placer le numériseur 18 successivement dans les positions d'acquisition des images des différents éléments à contrôler 4.

Les moyens 16 de déplacement comprennent un dispositif 24 propre à déplacer le numériseur 18 par rapport à la structure 3. Le dispositif 24 est avantageusement un bras robotisé sur lequel sont montés les moyens 14 d'acquisition.

Les moyens 16 de déplacement comprennent par ailleurs un dispositif 26 propre à déplacer la structure 3 par rapport aux moyens 14 d'acquisition. Avantageusement, le dispositif 26 est un bâti de support de la structure 3, mobile suivant un ou plusieurs degrés de liberté. Le bâti de support est par exemple mobile en rotation autour de deux axes de rotation.

La combinaison du bras robotisé et du bâti mobile permet de placer le numériseur 18, par rapport à la structure 3, dans les positions d'acquisition nécessaires au contrôle de la conformité de la réalisation des éléments de la structure 3.

L'unité centrale 7 de commande est par exemple un calculateur comprenant une mémoire 30, une unité de calcul 32.

L'unité de calcul 32 est adaptée pour exécuter des applications contenues dans la mémoire 30, notamment un système d'exploitation permettant le fonctionnement classique d'un système informatique.

La mémoire 30 comprend des données relatives à la structure 3, en particulier un modèle numérique M tridimensionnel de la structure 3, préalablement généré à partir d'un programme de conception assistée par ordinateur. La mémoire 30 comprend également des données de paramétrage P du système 1, modifiables par un utilisateur.

Par ailleurs, la mémoire 30 est propre à stocker des résultats de contrôle de la conformité de la réalisation des éléments de la structure 3.

La mémoire 30 comprend en outre des applications destinées à être exécutées par l'unité de calcul 32.

En particulier, le module 8 de commande et le module 10 de vérification comprennent des applications contenues dans la mémoire 30 et exécutées par l'unité de calcul 32. Cette unité de calcul comporte un ou plusieurs processeurs.

Le module 12 d'interface comprend des moyens 34 d'interface homme machine reliés à l'unité centrale 7, permettant à la fois une saisie de données tels que des paramètres par un utilisateur et un affichage, à destination de cet utilisateur, de résultats du procédé de contrôle selon l'invention.

Le module 8 de commande comprend une application 40 de préparation de la commande du bras robotisé 24 et du numériseur 18 et une application 42 de mise en oeuvre de cette commande.

L'application 40 de préparation est propre à générer, à partir du modèle numérique M de la structure 3 et de paramètres saisis par un utilisateur, des données de commande du bras robotisé 24 et du numériseur 18 destinées à être utilisées par l'application 42.

L'application 40 de préparation est ainsi propre à récupérer, dans la mémoire 30, le modèle numérique M de la structure 3 et des données de paramétrage P du système 1.

Les données de paramétrage P comprennent par exemple des spécifications techniques relatives à la structure 3, définissant des exigences techniques demandées à la structure 3, ainsi qu'une identification d'un ou plusieurs types d'éléments à contrôler sur la structure 3, par exemple les rivets.

Les données de paramétrage P comprennent également des données relatives à la géométrie, à la commande du bras robotisé 24 et du bâti de support 26, et à l'ensemble des mouvements pouvant être effectués par le bras robotisé 24 et le bâti de support 26. Ces données de paramétrage P comprennent en outre des données techniques relatives au numériseur 18, définissant en particulier les conditions optimales de prise de vue d'une image d'un élément.

L'application 40 de préparation comprend par ailleurs des moyens de localisation sur la structure 3 des éléments à contrôler. Ces moyens de localisation sont ainsi propres à identifier, à partir du modèle numérique M de la structure 3, des données de paramétrage P (en particulier des spécifications techniques) et des images obtenues à partir du numériseur 18, où ces éléments 4 sont situés sur la structure 3.

L'application 40 de préparation est en outre configurée pour déterminer, pour chaque élément à contrôler 4, une ou plusieurs positions d'acquisition d'une image de cet élément à contrôler 4, notamment à partir du modèle numérique M de la structure 3 et des données techniques relatives au numériseur 18.

L'acquisition par le numériseur 18 d'une image de chacun des éléments à contrôler nécessite que ce numériseur 18 soit positionné successivement dans chacune des positions d'acquisition associée à ces éléments 4, selon une trajectoire prédéterminée.

L'application 40 de préparation comprend des moyens de sélection des éléments 4 à contrôler et des moyens de sélection, parmi les positions du bâti 26 disponibles dans les données de paramétrage P, de celles qui seront strictement nécessaires pour que le bras robotisé 24 et le numériseur 18 puissent avoir accès à l'ensemble des positions d'acquisition des éléments 4 à contrôler.

L'application 40 de préparation comprend également des moyens de détermination, pour chaque position de bâti sélectionnée, de la trajectoire devant être suivie par le numériseur 18 par rapport à la structure 3 et des moyens de validation de cette trajectoire. Cette trajectoire comprend l'ensemble des positions d'acquisition des images des éléments à contrôler pour la position du bâti 26 correspondante. Les moyens de validation vérifient notamment que ces positions d'acquisition sont effectivement atteignables par le numériseur 18.

Avantageusement, cette trajectoire est une trajectoire optimale, notamment une trajectoire de longueur minimale, ce qui permet de minimiser la durée d'acquisition des images par le numériseur 18 et le déplacement du bras 24.

L'application 40 est également propre à déterminer, pour chaque position du bâti sélectionnée, à partir de la trajectoire correspondante calculée pour le bras robotisé, quels mouvements doivent être accomplis par ce bras robotisé 24 pour que le numériseur 18 suive cette trajectoire. La sélection des positions du bâti et la détermination des mouvements du bras robotisé 24 sont établis en fonction des données de paramétrage P issues de la mémoire 30, en particulier des données relatives à l'ensemble des mouvements possibles du bras robotisé 24 et du bâti de support 26.

L'application 40 de préparation comprend par ailleurs des moyens pour générer, à partir de ces mouvements, un programme de commande du bras robotisé 24 et du numériseur 18.

Ce programme de commande est destiné à être exécuté par l'application 42.

L'application 42 de mise en oeuvre de la commande est propre à exécuter le programme de commande du bras robotisé 24, et du numériseur 18 généré par l'application 40 de préparation, pour commander pour chaque position du bâti sélectionnée le déplacement du numériseur 18 selon la trajectoire prédéterminée, et pour commander l'acquisition par le numériseur 18 d'une image lorsque ce numériseur 18 est dans une des positions d'acquisition préalablement déterminées.

Le module 10 de vérification est configuré pour déterminer, à partir des images acquises par le numériseur 18, la conformité de la réalisation de chacun des éléments à contrôler 4, et pour générer un rapport à destination d'un utilisateur récapitulant ces résultats de contrôle.

Le module 10 de vérification comprend ainsi une application 50 d'analyse d'images et une application 52 de restitution des résultats de contrôle.

L'application 50 d'analyse est propre à analyser chaque image acquise par le numériseur 18 et à déterminer, à partir de l'image ou des images d'un élément à contrôler 4 donné, un indice de conformité représentatif de la conformité de réalisation de cet élément 4 par rapport à une qualité attendue, définie à partir du modèle numérique M de la structure 3.

Pour cela, l'application 50 d'analyse est propre à générer, à partir du modèle numérique M de la structure 3, une pluralité d'images théoriques des éléments à contrôler 4, chacune analogue à une image réelle distincte acquise par le numériseur 18.

Chaque image théorique représente ainsi l'image d'un élément donné qui devrait être acquise par le numériseur 18 dans une position d'acquisition donnée si la structure 3 était intégralement conforme au modèle numérique M.

Par ailleurs, l'application 50 d'analyse est propre à comparer chaque image acquise par le numériseur 18 à l'image théorique analogue correspondante, pour en déduire un ou plusieurs indices de conformité de l'élément à contrôler 4 représenté sur cette image.

Cet indice de conformité est représentatif de la conformité de réalisation de l'élément avec les pièces environnantes de la structure 3, par rapport au modèle numérique M.

La comparaison de l'image acquise par le numériseur 18 à l'image théorique analogue correspondante est par exemple réalisée en extrayant de l'image acquise un nuage de points, et en recalant ces points sur l'image théorique, de manière à mesurer une divergence entre ces deux images par calcul de la distance entre les points sur l'image acquise et sur l'image théorique.

Ainsi, à chaque point du nuage de points est associée une distance mesurant un écart entre l'image acquise et l'image théorique pour ce point.

L'indice de conformité est alors par exemple constitué d'un ensemble de valeurs numériques, chacune associée à un point de l'image. En variante, l'indice de conformité est une unique valeur numérique déterminée à partir de cet ensemble de valeur, et mesurant une distance globale entre l'image acquise et l'image théorique.

L'application 52 de restitution est propre à générer un rapport à destination de l'utilisateur, destiné à être affiché par le module 12 d'interface.

Notamment, l'application 52 de restitution est propre à générer une représentation graphique des indices de conformité.

Il s'agit par exemple d'une représentation de la structure 3 associée à un code couleur, la couleur de chaque point d'un élément à contrôler 4 étant représentative de la valeur de l'indice de conformité calculée pour ce point.

En variante, si une unique valeur numérique d'indice de conformité est associée à un élément à contrôler 4, celui-ci est représenté par une couleur uniforme représentative de cette valeur.

Une telle représentation permet une identification rapide par un opérateur des éléments de la structure 3 non conformes au modèle numérique M.

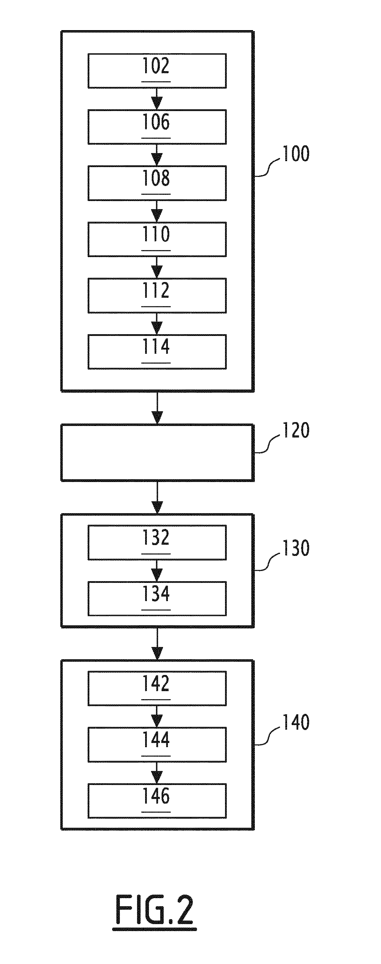

Un procédé selon un mode de réalisation de l'invention, mis en oeuvre au moyen du système de la Figure 1, va maintenant être décrit en référence à la Figure 2.

Ce procédé comporte une phase 100 de préparation de la commande du bras robotisé 24 et du numériseur 18, conduisant à la génération d'un programme de commande par l'application 40 de préparation, à partir des données de paramétrage P et du modèle numérique M stockés dans la mémoire 30.

Cette phase 100 comprend ainsi une étape 102 d'initialisation, incluant une modification éventuelle de certains paramètres du système 1 par un utilisateur, et un chargement par l'application 40 de préparation, depuis la mémoire 30, du modèle numérique M de la structure 3 et des données de paramétrage P du système 1.

Les paramètres susceptibles d'être modifiés par l'utilisateur lors de cette étape 102 comprennent notamment le type d'éléments dont la conformité doit être vérifiée lors de la mise en oeuvre du procédé. L'utilisateur peut ainsi choisir de contrôler uniquement certaines pièces, par exemple les organes de fixation de la structure 3.

Cette modification des paramètres est réalisée par l'intermédiaire des moyens 34 d'interface homme machine.

La phase 100 de préparation comprend ensuite une étape 106 de localisation, sur la structure 3, des éléments à contrôler 4, mise en oeuvre par l'application 40 de préparation. Lors de cette étape 106, les moyens de localisation identifient, à partir du modèle numérique M de la structure 3, des données de paramétrage P (en particulier des spécifications techniques) et des images obtenues à partir du numériseur 18, où ces éléments 4 sont situés sur la structure 3.

Puis, lors d'une étape 108 de détermination des positions d'acquisition, l'application 40 de préparation calcule, pour chaque position du bâti 26 sélectionnée, pour chaque élément à contrôler 4 identifié lors de l'étape 106, une ou plusieurs positions d'acquisition d'une image de cet élément 4. Ces positions sont calculées par l'application 40 à partir du modèle numérique M de la structure 3 et des données techniques relatives au numériseur 18.

On considèrera par la suite qu'une unique position d'acquisition est associée à chaque image.

Cette étape 108 est suivie d'une étape 110 de détermination, par l'application 40, de la trajectoire devant être suivie par le numériseur 18 par rapport à la structure 3, pour permettre l'acquisition des images souhaitées.

Puis, dans une étape 112, l'application 40 de préparation détermine pour chaque position du bâti 26 sélectionnée, à partir de la trajectoire ainsi calculée, une suite de mouvements devant être accomplis respectivement par le bras robotisé 24 pour que le numériseur 18 suive cette trajectoire. L'application 40 prend pour cela en compte les données de paramétrage P issues de la mémoire 30, en particulier les données relatives à l'ensemble des mouvements possibles du bras robotisé 24 et du bâti de support 26.

La phase 100 de préparation comprend ensuite une étape 114 de génération, à partir des mouvements déterminés lors de l'étape 112, d'un programme de commande du bras robotisé 24 et du numériseur 18, et transmet ce programme à l'application 42.

La phase 100 de préparation est ainsi suivie d'une phase 120 d'acquisition des images des éléments à contrôler 4.

Le bâti 26 est alors positionné dans la première position de bâti sélectionnée.

Lors de cette phase 120 d'acquisition, l'application 42 exécute le programme de commande du bras robotisé 24 et du numériseur 18 généré pour cette position du bâti 26 par l'application 40 de préparation. L'application 42 commande ainsi le déplacement du numériseur 18 selon la trajectoire prédéterminée, et l'acquisition par le numériseur 18 d'images des éléments à contrôler 4.

S'il est prévu de faire l'acquisition d'images sur plusieurs positions du bâti 26, celui-ci est ensuite positionné dans la position sélectionnée suivante et la phase 120 est renouvelée, l'application 42 exécutant alors le programme de commande du déplacement du bras robotisé 24 associé à cette nouvelle position du bâti et préalablement généré par l'application 40. Le procédé selon l'invention comporte ainsi autant d'étapes 120 successives que de positions de bâti sélectionnées.

Dans ce mode de réalisation, le bâti 26 est positionné à l'aide du bras robotisé 24 lui-même qui dispose d'un organe adapté à coopérer avec ce bâti 26 pour le déplacer d'une position sélectionnée à une autre. L'application 40 est également apte à déterminer les trajectoires du bras 24 pour faire se déplacer le bâti 26 d'une position sélectionnée à une autre entre deux phases d'acquisition 120.

Lors de chaque phase 120 d'acquisition, le numériseur 18 est donc positionné successivement dans chacune des positions d'acquisition déterminées lors de l'étape 108, et acquiert une image dans chacune de ces positions. Ces images sont transmises à l'unité centrale 7 et stockées sur la mémoire 30.

Chaque phase 120 d'acquisition est suivie d'une phase 130 de vérification, lors de laquelle le module 10 de vérification détermine, à partir des images acquises lors de la phase 120, la conformité de réalisation de chacun des éléments à contrôler 4.

Lors de cette phase 130, l'application 50 d'analyse détermine, pour chaque élément à contrôler 4, un indice de conformité représentatif de la conformité de réalisation de cet élément 4 par rapport à une qualité attendue, telle que définie à partir du modèle numérique M de la structure 3, et ce à partir de l'image de cet élément 4.

A cette fin, lors d'une étape 132, l'application 50 d'analyse génère à partir du modèle numérique M de la structure 3 une image théorique de cet élément à contrôler 4, analogue à l'image de cet élément acquise par le numériseur 18.

Puis, lors d'une étape 134 de comparaison, l'application 50 d'analyse compare chaque image de l'élément à contrôler 4 à l'image théorique analogue correspondante, et en déduit un ou plusieurs indices de conformité de l'élément représenté sur cette image.

Comme précédemment décrit, cette comparaison comprend, par exemple, une reconstruction depuis les images acquises d'un nuage de points mesurés, un recalage de ces points par rapport à leur représentation tridimensionnelle théorique correspondante et une mesure, à partir de ce recalage de la distance entre chaque point de mesure et le point analogue théorique correspondant.

Ainsi, à l'issue de la phase 130 de vérification, un indice de conformité constitué d'une ou plusieurs valeurs numériques est associé à chaque élément à contrôler 4, et quantifie la qualité de réalisation de cet élément.

Cette phase 130 de vérification est suivie d'une phase 140 de restitution des résultats du contrôle à l'utilisateur.

Cette phase 140 comprend une étape 142, lors de laquelle l'application 52 de restitution génère un rapport à destination de l'utilisateur récapitulant les résultats du contrôle.

Comme précédemment décrit, ce rapport comprend par exemple une représentation graphique des indices de conformité, notamment sous la forme d'une représentation tridimensionnelle colorée de la structure 3, associée à un code couleur.

La phase 140 de restitution comprend par ailleurs une étape 144 d'affichage par le module 12 d'interface, à destination de l'utilisateur, du rapport généré lors de l'étape 142, et une étape 146 de sauvegarde de ce rapport dans la mémoire 30.

Le procédé de contrôle selon l'invention ne nécessite ainsi aucune intervention de l'utilisateur, si ce n'est lors de l'étape d'initialisation 102. Notamment, l'utilisation du modèle numérique M de la structure à contrôler permet de minimiser les interventions humaines et de fournir un procédé de contrôle réalisé entièrement de manière automatique.

Un tel procédé permet de diminuer de manière significative le temps nécessaire au contrôle des éléments de la structure.

Ce procédé permet également de garantir la reproductibilité et la fiabilité des contrôles réalisés.

En particulier, la dernière version du modèle numérique M de la structure est automatiquement utilisée pour ce contrôle, ce qui permet d'éviter un écart de configuration entre la réalisation obtenue et ce modèle numérique M final.

De plus le système et le procédé selon l'invention autorisent aussi bien un contrôle systématique de l'ensemble des éléments de la structure qu'un contrôle sélectif de certains éléments de la structure à l'exclusion des autres éléments.

Il devra être compris que les exemples de réalisation présentés ci-dessus ne sont pas limitatifs.

Notamment, le système selon l'invention peut être utilisé pour le contrôle de la réalisation de tous types d'éléments de structure d'un aéronef et sans qu'il ne s'agisse nécessairement d'un contrôle d'assemblage. Il peut s'agir par exemple d'un contrôle d'état de surface ou d'un contrôle de la forme géométrique d'un élément.

De plus, en variante le déplacement du bâti 26 supportant la structure 3 est réalisé non pas par le bras robotisé 24 mais par un mécanisme dédié.

Dans une autre variante le bâti 26 supportant la structure 3 est fixe, seul le numériseur 18 étant déplacé pour suivre la trajectoire déterminée.

En outre, selon une variante, le rapport de contrôle peut se présenter sous la forme d'un tableau ou d'un texte énumérant éléments de la structure dont la réalisation est non conforme au modèle numérique M.

Les caractéristiques techniques des variantes mentionnées ci-dessus peuvent être combinées entre elles.

## Revendications

1. Système de contrôle automatique de la conformité de réalisation d'éléments (4) dans une structure (3) d'aéronef, **caractérisé en ce qu'il** comporte :
- un module d'acquisition (6), comprenant :
■ des moyens (14, 18) d'acquisition d'une image desdits éléments (4), et
■ des moyens (16, 24, 26) de déplacement relatif desdits moyens (14, 18) d'acquisition par rapport à ladite structure (3), configurés pour positionner lesdits moyens (14, 18) d'acquisition dans une position d'acquisition d'une image de chacun desdits éléments (4),
- un module de commande (8) dudit module d'acquisition (6), configuré pour générer une acquisition par lesdits moyens (14, 18) d'acquisition, pour chacun desdits éléments (4), d'au moins une image dudit élément (4), et
- un module de vérification (10) de la conformité de réalisation de chaque élément (4), configuré pour analyser des images d'éléments (4) acquises par lesdits moyens (14, 18) d'acquisition et pour déterminer, à partir desdites images, au moins un indice de conformité représentatif d'une conformité de réalisation de chaque élément (4) par rapport à un modèle numérique prédéfini dudit élément (4).

2. Système (1) selon la revendication 1, **caractérisé en ce que** ledit module de commande (8) est configuré pour commander un déplacement, par lesdits moyens (16, 24, 26) de déplacement, desdits moyens (14, 18) d'acquisition successivement dans chaque position d'acquisition d'une image d'un élément (4), selon une trajectoire prédéfinie.

3. Système (1) selon la revendication 2, **caractérisé en ce que** ledit module de commande (8) comprend des moyens (40) de localisation, configurés pour déterminer, à partir des images acquises et d'un modèle numérique (M) de ladite structure (3), une localisation de chacun desdits éléments (4) sur ladite structure (3) et **en ce que** ledit module de commande (8) comprend des moyens (40) de détermination de ladite trajectoire prédéfinie, à partir de la localisation de chacun desdits éléments (4) sur ladite structure (3).

4. Système (1) selon l'une quelconque des revendications précédentes, **caractérisé en ce que** lesdits moyens (16, 24, 26) de déplacement comprennent un bras robotisé (24) sur lequel sont montés lesdits moyens (14, 18) d'acquisition, ledit bras robotisé (24) étant propre à déplacer lesdits moyens (14, 18) d'acquisition par rapport à ladite structure (3).

5. Système (1) selon la revendication 4, **caractérisé en ce que** lesdits moyens (16, 24, 26) de déplacement comprennent un bâti (26) de support de ladite structure (3), ledit bâti (26) de support étant configuré pour déplacer ladite structure (3).

6. Système (1) selon la revendication 5, **caractérisé en ce que** ledit module de commande (8) est configuré pour sélectionner les positions du bâti (26) dans lesquelles une acquisition d'images doit être générée et pour commander pour chaque position du bâti (26) sélectionnée un déplacement desdits moyens (14, 18) d'acquisition successivement dans chaque position d'acquisition d'une image d'un élément (4), selon une trajectoire prédéfinie.

7. Système selon la revendication 6, **caractérisé en ce que** ledit module de commande (8) est configuré pour commander un déplacement du bras robotisé (24) pour placer ledit bâti (26) dans chaque position sélectionnée.

8. Système (1) selon l'une quelconque des revendications précédentes, **caractérisé en ce que** le module de vérification (10) comprend des moyens (50) de comparaison de chaque image d'un élément (4) avec une image théorique analogue de cet élément (4) déterminée à partir d'un modèle numérique (M) de ladite structure (3).

9. Système (1) selon l'une quelconque des revendications précédentes, **caractérisé en ce que** lesdits moyens (14, 18) d'acquisition sont propres à acquérir une image permettant une représentation tridimensionnelle de chaque élément (4).

10. Procédé de contrôle automatique de la conformité de réalisation d'éléments (4) dans une structure (3) d'aéronef, **caractérisé en ce qu'il** comprend :
- une phase de fourniture d'un système (1) selon l'une quelconque des revendications précédentes,
- une phase d'acquisition (120) d'images, comprenant une commande par ledit module de commande (8) dudit module d'acquisition (6) pour l'acquisition par ledit module d'acquisition (6) d'images desdits éléments (4),
- une phase de vérification (130) de la conformité de réalisation de chaque élément (4), comprenant une analyse des images d'éléments (4) pour déterminer, à partir desdites images, un indice de conformité représentatif d'une conformité de réalisation de chaque élément (4) par rapport à un modèle numérique prédéfini dudit élément (4).

11. Procédé selon la revendication 10, **caractérisé en ce que** la phase d'acquisition (120) comporte un déplacement par lesdits moyens (16, 24, 26) de déplacement desdits moyens (14, 18) d'acquisition successivement dans chaque position d'acquisition d'une image d'un élément (4), selon une trajectoire prédéfinie.

12. Procédé selon la revendication 11, **caractérisé en ce qu'il** comprend en outre une phase de préparation (100) du contrôle, comprenant une étape (114) de génération d'un programme de contrôle dudit module d'acquisition (6) pour l'acquisition par ledit module d'acquisition (6) des images desdits éléments (4).

13. Procédé selon la revendication 12, **caractérisé en ce que** ladite phase de préparation (100) comprend en outre :
- une étape de détermination (106), à partir d'un modèle numérique (M) de ladite structure (3), d'une localisation de chacun desdits éléments (4) sur ladite structure (3),
- une étape de détermination (110) de ladite trajectoire prédéfinie, à partir de la localisation de chacun desdits éléments (4) sur ladite structure (3).

14. Procédé selon l'une quelconque des revendications 10 à 13, **caractérisé en ce que** la phase de vérification (130) comprend une étape (134) de comparaison de chaque image d'un élément (4) avec une image théorique analogue de cet élément (4) déterminée à partir d'un modèle numérique (M) de ladite structure (3).

15. Procédé selon l'une quelconque des revendications 10 à 14, **caractérisé en ce qu'il** comporte en outre une phase (140) d'affichage, à destination d'un utilisateur, d'au moins une partie des indices de qualité déterminés pour lesdits éléments (4).
